# EUROPEAN PATENT SPECIFICATION

(11) **EP 1 978 697 B1**
(45) Date of publication and mention of the grant of the patent: **15.08.2012**
(21) Application number: 06805018.6
(22) Date of filing: 20.10.2006
(51) Int. Cl.: H04L 29/02, H04L 12/46, H04L 12/28

(54) **A METHOD FOR TRANSMITTING SUBSCRIBER LINE LAYER 2 ENCAPSULATION MODE TO BROADBAND ACCESS SERVER**
VERFAHREN ZUR ÜBERTRAGUNG DER SCHICHT 2 VERKAPSELUNGS-MODUS EINER TEILNEHMERLEITUNG AN EINEN BREITBANDZUGANGSSERVER
PROCÉDÉ POUR TRANSMETTRE LE MODE D'ENCAPSULATION DE COUCHE 2 DE LA LIGNE D'ABONNÉ VERS UN SERVEUR D'ACCÈS À BANDE LARGE

(30) Priority: 14.02.2006 CN 200610007490
(43) Date of publication of application: 08.10.2008
(73) Proprietor: Huawei Technologies Co., Ltd., Longgang District, Shenzhen Guangdong 518129 (CN)
(72) Inventor: WANG, Hao, Guangdong 518129 (CN)
(74) Representative: Thun, Clemens
(86) International application number: PCT/CN2006/002809
(87) International publication number: WO 2007/093098

(56) References cited:
- EP-A- 1 124 402
- WO-A-02/28028
- WO-A-97/29563
- WO-A-98/13764
- WO-A1-02/28028
- JP-A- 2004 040 586
- US-A- 6 108 350
- US-A1- 2002 176 365
- US-A1- 2005 152 370
- US-B1- 6 445 715
- US-B1- 6 680 940

## Description

### CROSS-REFERENCE TO RELATED APPLICATIONS

This application claims priority to Chinese Patent Application No.200610007490.3, filed on February 14. 2006, entitled "METHOD FOR TRANSFERRING SUBSCRIBER LINE LAYER 2 ENCAPSULATION MODE TO BROADBAND REMOTE ACCESS SERVER", commonly assigned herein for all purposes.

### FIELD OF THE TECHNOLOGY

The present invention relates to the field of communication technology, in particular to a method for transferring a subscriber line Layer 2 encapsulation mode to a broadband remote access server (BRAS) by a broadband subscriber access device.

### BACKGROUND

As operators are constructing broadband networks on a large scale, a networking mode has transited from asynchronous transmission mode digital subscriber line access multiplexer (ATM DSLAM) to IP DSLAM. As an intelligent service switch, the broadband remote access server (BRAS) device needs to control quality of service (QoS) of the entire access network to realize different treatment for different services, in other words, to realize QoS scheduling. According to requirements of DSL Forum Working Text WT-101, the BRAS needs to provide IP DSLAM with three-level scheduling considering BRAS port, DSLAM uplink interface, and subscriber line rate.

The BRAS implements the scheduling on the IP layer to ensure that a downlink interface rate and the subscriber line rate of the downlink direction does not exceed the DSLAM uplink interface rate and the subscriber line rate on the DSLAM uplink interface and subscriber line, but the BRAS does not know the subscriber line Layer 2 encapsulation mode or the overhead brought by such a Layer 2 encapsulation mode, while different overheads influence accuracy of the QoS scheduling.

It is well-known that Layer 2 encapsulation modes on the subscriber line include PPPoA, IPoA, IPoEoA, and PPPoEoA, in which PPP indicates point-to-point protocol, A indicates ATM, E indicates Ethernet, and o indicates "over". Additionally, the Layer 2 encapsulation overhead is also influenced by factors about whether to add a virtual local area network tag (VLAN tag) and whether to adopt a logical link control (LLC MUX) or a virtual channel (VC MUX) encapsulation mode (for details, refer to DSL FORUM TR-062). Furthermore, the broadband subscriber access device (e.g. DSLAM, Layer 2 switches) can learn the subscriber line Layer 2 encapsulation mode. US2005/0152370 discloses reporting a request of a subscriber for joining a multicast group from a DSLAM to BRAS.

Therefore, it has become a problem to be solved how to make the BRAS know the subscriber line Layer 2 encapsulation mode so that the BRAS can adjust a QoS scheduler according to the Layer 2 encapsulation modes of different subscriber lines, and that the accuracy of adjusting the QoS scheduling by the BRAS can be ensured.

According to the requirements of the WT-101, a solution in the prior art is to add an option of the subscriber line Layer 2 encapsulation mode in the point-to-point protocol (PPP) or dynamic host configuration protocol (DHCP) operations when a subscriber initiates PPP dialing or DHCP access. In other words, when the subscriber accesses the network, the DSLAM inserts an option of the subscriber line Layer 2 encapsulation mode into the Option of PPP or DHCP to inform the BRAS.

Although the solution enables the BRAS to know the subscriber line Layer 2 encapsulation mode of the accessed subscriber, the DSLAM still needs to differentiate access modes of access subscribers so as to insert the Layer 2 encapsulation mode using different options for different access modes. For example, if a subscriber accesses the network via the PPP, the DSLAM needs to insert the subscriber line Layer 2 encapsulation mode in the corresponding operation in the PPP mode; if a subscriber accesses the network via the DHCP, the DSLAM needs to insert the subscriber line Layer 2 encapsulation mode in the corresponding operation in the DHCP mode. As a result, not only the workload of the PPP or DHCP module is increased, but also the resource overhead of the DSLAM is increased.

### SUMMARY

Accordingly, embodiments of the present invention provide two methods for transferring a subscriber line Layer 2 encapsulation mode to a broadband remote access server (BRAS), which enables the BRAS to know the Layer 2 encapsulation mode of access subscribers and avoid additional overheads brought to the DSLAM in differentiating access modes of the subscribers.

Accordingly, technical solutions of the embodiments of the present invention are achieved as following:

A method for transferring a subscriber line Layer 2 encapsulation mode to a BRAS by a digital subscriber line access multiplexer, DSLAM, is provided, which includes the following steps:

The subscriber line Layer 2 encapsulation mode of the subscriber is transferred to the BRAS after the DSLAM, detects that a subscriber currently satisfies a preset condition for reporting the subscriber line Layer 2 encapsulation mode.

Further, the subscriber line Layer 2 encapsulation mode of the subscriber is transferred to the BRAS through a policy information transfer protocol (PITP) packet.

The policy information of the subscriber line Layer 2 encapsulation mode is added into a policy information transfer type field of the PITP in advance.

The policy information transfer type field and an operation type field in the PITP packet are respectively set as a subscriber line Layer 2 encapsulation mode and a request mode, and meanwhile, the subscriber line Layer 2 encapsulation mode to be transferred is set into a policy information content field of the PITP packet and then transferred to the BRAS through the PITP packet.

The preset condition for reporting the subscriber line Layer 2 encapsulation mode is: the subscriber device is powered on, or the subscriber is connected to the Internet and gets ready to or begins to initiate an authentication request, or the subscriber line Layer 2 encapsulation mode is changed.

Another method for transferring a subscriber line Layer 2 encapsulation mode to a BRAS by a digital subscriber line access multiplexer, DSLAM, is further provided, which includes the following steps.

a. The BRAS initiates a subscriber line Layer 2 encapsulation mode inquiry request to the DSLAM, and the request includes a Layer 2 media access control (MAC) address of the inquired subscriber.

b. The DSLAM determines the inquired subscriber according to the Layer 2 MAC address, encapsulates the subscriber line Layer 2 encapsulation mode of the subscriber in a response packet, and returns the response packet to the BRAS.

Particularly, the BRAS initiates the subscriber line Layer 2 encapsulation mode inquiry request to the DSLAM through a policy information transfer protocol (PITP) packet, and the DSLAM encapsulates the subscriber line Layer 2 encapsulation mode of the subscriber into the PITP response packet, and returns the PITP response packet to the BRAS.

The policy information of the subscriber line Layer 2 encapsulation mode is added into the policy information transfer type field of the PITP in advance. The subscriber line Layer 2 encapsulation mode inquiry request is carried by a port information request packet, in which a policy information transfer type field in the packet indicates a subscriber line Layer 2 encapsulation mode, and an operation type field indicates requesting an inquiry.

The policy information transfer type field in the PITP response packet indicates a subscriber line Layer 2 encapsulation, the operation type field indicates a response, and the subscriber line Layer 2 encapsulation mode to be transferred is in the policy information content field.

The method further includes performing Step a when the BRAS detects that the subscriber is connected to the Internet and gets ready to or begins to initiate an authentication request.

The present invention enables the BRAS to know the Layer 2 encapsulation mode of the accessed subscriber, so as to prevent the accuracy of QoS scheduling from being influenced by different overheads caused by different Layer 2 encapsulation modes of the subscriber line. Furthermore, technical solutions of the present invention are implemented based on the PITP, and therefore the DSLAM does not need to differentiate the access modes of the subscribers, which reduces the DSLAM resource overhead and meanwhile reduces workload of the PPP or DHCP module in the DSLAM. In addition, embodiments of the prevent invention provide two implementation manners, namely, active and passive manners, which makes specific applications more flexible.

### DETAILED DESCRIPTION

The technical solution of the present invention is further illustrated below in detail.

The embodiments of the present invention can be realized by any protocol capable of transferring information between a digital subscriber line access multiplexer (DSLAM), and a broadband remote access server (BRAS). The embodiments of the present invention are illustrated below by taking an example that the present invention is based on a policy information transfer protocol (PITP). Details about the PITP has been illustrated in Chinese Patent Publication No. CN1674576 filed by the applicant, entitled "Method for Transferring Policy Information between Network Equipments", which will not be repeated here.

According to the PITP, it can be known that the PITP packet includes a policy information transfer type field, an operation type field, and a policy information content field. Different types of policy information are differentiated by the policy information transfer type field, different types of operations are differentiated by the operation type field, and the policy information content field is used to store specific content information.

In order to implement the embodiments of the present invention, an option of subscriber line Layer 2 encapsulation mode is added into the policy information transfer type field of the PITP in advance, which includes the following two specific implementation manners.

1. Active manner

Once the DSLAM detects that a subscriber currently satisfies a preset condition for reporting the subscriber line Layer 2 encapsulation mode, the DSLAM transfers the subscriber line Layer 2 encapsulation mode of the subscriber to the BRAS through a PITP packet. The specific transfer procedure includes: a policy information transfer type field and an operation type field in the PITP packet are set as a subscriber line Layer 2 encapsulation mode and a request mode respectively, and meanwhile the subscriber line Layer 2 encapsulation mode to be transferred is set into a policy information content field, and the subscriber line Layer 2 encapsulation mode is transferred to the BRAS through the PITP packet. In this way, the BRAS can know and record the subscriber line Layer 2 encapsulation mode, and adjust the QoS scheduler accordingly.

The above preset condition for reporting the subscriber line Layer 2 encapsulation mode is: the DSLAM is powered on, or the subscriber is connected to the Internet and gets ready to initiate an authentication request, or the subscriber is connected to the Internet and begins to initiate an authentication request, or the subscriber line Layer 2 encapsulation mode is changed.

2. Passive manner

When the BRAS detects that the subscriber is connected to the Internet and gets ready to or begins to initiate an authentication request, the BRAS initiates a subscriber line Layer 2 encapsulation mode inquiry request to the DSLAM through a PITP packet. The request includes a Layer 2 media access control (MAC) address of the inquired subscriber. Then, the DSLAM determines the inquired subscriber according to the Layer 2 MAC address, encapsulates the subscriber line Layer 2 encapsulation mode of the subscriber in a PITP response packet, and returns the PITP response packet to the BRAS. And then the BRAS can know and record the subscriber line Layer 2 encapsulation mode, thereby adjusts the QoS scheduler accordingly.

The above subscriber line Layer 2 encapsulation mode inquiry request is carried by a port information request packet, in which the policy information transfer type field in the packet indicates the subscriber line Layer 2 encapsulation, and an operation type field indicates requesting an inquiry. The policy information transfer type field in the PITP response packet indicates a subscriber line Layer 2 encapsulation, and the operation type field indicates making a response, and the policy information content field contains the subscriber line Layer 2 encapsulation mode under transfer.

No matter the active manner or the passive manner is adopted, the above broadband subscriber access device may be a digital subscriber line access multiplexer (DSLAM) or a Layer 2 switch.

Since the PITP is used to transmit data in the embodiments of the present invention, the DSLAM does not need to differentiate the accessing modes of the subscribers, which reduces the resource overhead and the workload of the PPP or DHCP module in the DSLAM.

In addition, adding and defining a new field in the PITP packet to transfer the subscriber line Layer 2 encapsulation mode of the subscriber to the BRAS can also implement the technical solutions of the present invention well. Since using the newly defined field(s) to implement the technical solutions of the present invention is the same as the active and passive manners, the details are not repeatedly described here.

Though illustration and description of the present disclosure have been given with reference to the embodiments thereof, it should be appreciated by persons of ordinary skill in the art that various changes in forms and details can be made without deviation from the scope of this disclosure, which are defined by the appended claims.

## Claims

1. A method for transferring a subscriber line Layer 2 encapsulation mode to a broadband remote access server, BRAS, **characterized in that**:
transferring, by a digital subscriber line access multiplexer, DSLAM, a subscriber line Layer 2 encapsulation mode of a subscriber to the BRAS after the DSLAM detects that the subscriber satisfies a preset condition for reporting the subscriber line Layer 2 encapsulation mode.

2. The method according to claim 1, wherein the subscriber line Layer 2 encapsulation mode of the subscriber is transferred to the BRAS through a policy information transfer protocol, PITP, packet.

3. The method according to claim 2, further comprising:
adding a policy information option of the subscriber line Layer 2 encapsulation mode into a policy information transfer type field of the PITP in advance; and
setting the policy information transfer type field and an operation type field in the PITP packet as a subscriber line Layer 2 encapsulation mode and a request mode respectively, and meanwhile setting the subscriber line Layer 2 encapsulation mode to be transferred into a policy information content field for being transferred to the BRAS through the PITP packet.

4. The method according to claim 2, wherein the preset condition for reporting the subscriber line Layer 2 encapsulation mode comprises: the subscriber device is powered on; or the subscriber is connected to the Internet and gets ready to initiate an authentication request or the subscriber is connected to the Internet and begins to initiate an authentication request; or the subscriber line Layer 2 encapsulation mode is changed.

5. A method for transferring a subscriber line Layer 2 encapsulation mode to a broadband remote access server, BRAS, **characterized in that**:
a. initiating, by the BRAS, a subscriber line Layer 2 encapsulation mode inquiry request to a digital subscriber line access multiplexer, DSLAM" wherein the request comprises a Layer 2 media access control, MAC, address of an inquired subscriber; and
b. determining, by the DSLAM, the inquired subscriber according to the Layer 2 MAC address, encapsulating the subscriber line Layer 2 encapsulation mode of the subscriber in a response packet, and returning the response packet to the BRAS.

6. The method according to claim 5, wherein the BRAS initiates the user line Layer 2 encapsulation mode inquiry request to the DSLAM through a policy information transfer protocol, PITP, packet; the DSLAM encapsulates the subscriber line Layer 2 encapsulation mode of the subscriber in a PITP response packet and returns the PITP response packet to the BRAS.

7. The method according to claim 6, wherein policy information of the subscriber line Layer 2 encapsulation mode is added into a policy information transfer type field of the PITP in advance; the subscriber line Layer 2 encapsulation mode inquiry request is carried by a port information request packet, wherein a policy information transfer type field in the packet indicates a subscriber line Layer 2 encapsulation, and an operation type field in the packet indicates requesting an inquiry; and
a policy information transfer type field in the PITP response packet indicates a subscriber line Layer 2 encapsulation, an operation type field in the PITP response packet indicates a response, and the subscriber line Layer 2 encapsulation mode to be transferred is in a policy information content field in the PITP response packet.

8. The method according to claim 6, further comprising: performing step a when the BRAS detects that the subscriber is connected to the Internet and gets ready to initiate an authentication request, or the subscriber is connected to the Internet and begins to initiate an authentication request.

## Patentansprüche

1. Verfahren zum Transferieren eines Teilnehmerleitung-Layer-2-Kapselungsmodus auf einen BRAS (Broadband Remote Access Server), **gekennzeichnet durch**:
Transferieren eines Teilnehmerleitung-Layer-2-Kapselungsmodus eines Teilnehmers durch einen DSLAM (Digital Subscriber Line Access Multiplexer) auf den BRAS, nachdem der DSLAM detektiert, dass der Teilnehmer einer voreingestellten Bedingung zum Melden des Teilnehmerleitung-Layer-2-Kapselungsmodus genügt.

2. Verfahren nach Anspruch 1, wobei der Teilnehmerleitung-Layer-2-Kapselungs-modus des Teilnehmers durch ein PITP-Paket (Policy Information Transfer Protocol) auf den BRAS transferiert wird.

3. Verfahren nach Anspruch 2, das weiterhin Folgendes umfasst:
Hinzufügen einer Regelinformationsoption des Teilnehmerleitung-Layer-2-Kapselungsmodus in ein Regelinformationstransfertypfeld des PITP im Voraus; und
Einstellen des Regelinformationstransfertypfelds und eines Operationstypfelds in dem PITP-Paket als ein Teilnehmerleitung-Layer-2-Kapselungsmodus beziehungsweise ein Anforderungsmodus und dabei Einstellen des Teilnehmerleitung-Layer-2-Kapselungsmodus zum Transferiertwerden in ein Regelinformationsinhaltsfeld zum Transferieren auf den BRAS durch das PITP-Paket.

4. Verfahren nach Anspruch 2, wobei die voreingestellte Bedingung zum Melden des Teilnehmerleitung-Layer-2-Kapselungsmodus Folgendes umfasst: die Teilnehmereinrichtung wird eingeschaltet; oder der Teilnehmer ist mit dem Internet verbunden und bereitet sich vor zum Initiieren einer Authentisierungsanforderung oder der Teilnehmer ist mit dem Internet verbunden und beginnt mit dem Initiieren einer Authentisierungsanforderung; oder der Teilnehmerleitung-Layer-2-Kapselungs-modus wird geändert.

5. Verfahren zum Transferieren eines Teilnehmerleitung-Layer-2-Kapselungsmodus auf einen BRAS (Broadband Remote Access Server), **dadurch gekennzeichnet, dass**:
a. Initiieren einer Teilnehmerleitung-Layer-2-Kapselungsmodusanfrage-anforderung durch den BRAS an einen DSLAM (Digital Subscriber Line Access Multiplexer), wobei die Anforderung eine Layer-2-MAC-Adresse (Media Access Control) eines angefragten Teilnehmers umfasst; und
b. Bestimmen des angefragten Teilnehmers durch den DSLAM gemäß der Layer-2-MAC-Adresse, Kapseln des Teilnehmerleitung-Layer-2-Kapselungsmodus des Teilnehmers in ein Antwortpaket und Zurückschicken des Antwortpakets an den BRAS.

6. Verfahren nach Anspruch 5, wobei der BRAS die Benutzerleitung-Layer-2-Kapselungsmodusanfrageanforderung an den DSLAM durch ein PITP-Paket (Policy Information Transfer Protocol) initiiert; der DSLAM kapselt den Teilnehmerleitung-Layer-2-Kapselungsmodus des Teilnehmers in ein PITP-Antwortpaket und schickt das PITP-Antwortpaket an den BRAS zurück.

7. Verfahren nach Anspruch 6, wobei Regelinformationen des Teilnehmerleitung-Layer-2-Kapselungsmodus in ein Regelinformationstransfertypfeld des PITP im Voraus hinzugefügt wird; die Teilnehmerleitung-Layer-2-Kapselungsmodusanfrage-anforderung von einem Portinformationsanforderungspaket geführt wird, wobei ein Regelinforinationstransfertypfeld in dem Paket eine Teilnehmerleitung-Layer-2-Kapselung anzeigt und ein Operationstypfeld in dem Paket das Anfordern einer Anfrage anzeigt; und
ein Regelinforinationstransfertypfeld in dem PITP-Antwortpaket eine Teilnehmerleitung-Layer-2-Kapselung anzeigt, ein Operationstypfeld in dem PITP-Antwortpaket eine Antwort anzeigt und sich der zu transferierende Teilnehmerleitung-Layer-2-Kapselungsmodus in einem Regelinformationsinhaltsfeld in dem PITP-Antwortpaket befindet.

8. Verfahren nach Anspruch 6, weiterhin umfassend: Durchführen von Schritt a, wenn der BRAS detektiert, dass der Teilnehmer mit dem Internet verbunden ist und sich vorbereitet, eine Authentisierungsanforderung zu initiieren, oder der Teilnehmer mit dem Internet verbunden ist und das Initiieren einer Authentisierungsanforderung beginnt.

## Revendications

1. Procédé de transfert d'un mode d'encapsulation de Couche 2 de ligne d'abonné à un serveur d'accès distant à large bande, BRAS, **caractérisé par** :
le transfert, par un multiplexeur d'accès de lignes d'abonnés numériques, DSLAM, d'un mode d'encapsulation de Couche 2 de ligne d'abonné d'un abonné au BRAS après que le DSLAM détecte que l'abonné satisfait à une condition préétablie pour signaler le mode d'encapsulation de Couche 2 de ligne d'abonné.

2. Procédé selon la revendication 1, dans lequel le mode d'encapsulation de Couche 2 de ligne d'abonné de l'abonné est transféré au BRAS par le biais d'un paquet à protocole de transfert d'informations de consignes, PITP.

3. Procédé selon la revendication 2, comprenant en outre :
l'ajout à l'avance d'une option d'informations de consignes du mode d'encapsulation de Couche 2 de ligne d'abonné dans un champ de type de transfert d'informations de consignes du PITP ; et
le réglage du champ de type de transfert d'informations de consignes et d'un champ de type d'opération dans le paquet PITP en tant que mode d'encapsulation de Couche 2 de ligne d'abonné et mode de requête respectivement, et entre temps le réglage du mode d'encapsulation de Couche 2 de ligne d'abonné à transférer dans un champ de contenu d'informations de consignes en vue de son transfert au BRAS par le biais du paquet PITP.

4. Procédé selon la revendication 2, dans lequel la condition préétablie pour signaler le mode d'encapsulation de Couche 2 de ligne d'abonné comprend : le dispositif d'abonné est mis sous tension ; ou l'abonné est connecté à l'Internet et s'apprête à lancer une requête d'authentification ou l'abonné est connecté à l'Internet et commence à lancer une requête d'authentification ; ou le mode d'encapsulation de Couche 2 de ligne d'abonné est changé.

5. Procédé de transfert d'un mode d'encapsulation de Couche 2 de ligne d'abonné à un serveur d'accès distant à large bande, BRAS, **caractérisé par** :
a. le lancement, par le BRAS, d'une requête d'interrogation de mode d'encapsulation de Couche 2 de ligne d'abonné à un multiplexeur d'accès de lignes d'abonnés numériques, DSLAM, la requête comprenant une adresse de commande d'accès au support, MAC de Couche 2, d'un abonné interrogé ; et
b. la détermination, par le DSLAM, de l'abonné interrogé en fonction de l'adresse MAC de Couche 2, l'encapsulation du mode d'encapsulation de Couche 2 de ligne d'abonné de l'abonné dans un paquet de réponse, et l'envoi du paquet de réponse au BRAS.

6. Procédé selon la revendication 5, dans lequel le BRAS lance la requête d'interrogation de mode d'encapsulation de Couche 2 de ligne d'abonné auprès du DSLAM par l'intermédiaire d'un paquet de protocole de transfert d'informations de consignes, PITP ; le DSLAM encapsule le mode d'encapsulation de Couche 2 de ligne d'abonné de l'abonné dans un paquet de réponse PITP et envoie le paquet de réponse PITP au BRAS.

7. Procédé selon la revendication 6, dans lequel les informations de consignes du mode d'encapsulation de Couche 2 de ligne d'abonné sont ajoutées à l'avance dans un champ de type de transfert d'informations de consignes du PITP ; la requête d'interrogation de mode d'encapsulation de Couche 2 de ligne d'abonné est acheminée par un paquet de requête d'informations de port, un champ de type de transfert d'informations de consignes dans le paquet indiquant une encapsulation de Couche 2 de ligne d'abonné, et un champ de type d'opération dans le paquet indiquant la requête d'une interrogation ; et
un champ de type de transfert d'informations de consignes dans le paquet de réponse PITP indique une encapsulation de Couche 2 de ligne d'abonné, un champ de type d'opération dans le paquet de réponse PITP indique une réponse, et le mode d'encapsulation de Couche 2 de ligne d'abonné à transférer se trouve dans un champ de contenu d'informations de consignes dans le paquet de réponse PITP.

8. Procédé selon la revendication 6, comprenant en outre : l'exécution de l'étape a quand le BRAS détecte que l'abonné est connecté à l'Internet et s'apprête à lancer une requête d'authentification, ou l'abonné est connecté à l'Internet et commence à lancer une requête d'authentification.
